# EUROPEAN PATENT SPECIFICATION

(11) **EP 4 213 613 B1**
(45) Date of publication and mention of the grant of the patent: **21.05.2025**
(21) Application number: 22777716.6
(22) Date of filing: 12.09.2022
(51) Int. Cl.: A01F 25/13, A01F 25/16

(54) **COVERING DEVICE FOR SILAGE IN A SILO AND METHOD FOR COVERING A SILO FILLED WITH SILAGE**
ABDECKVORRICHTUNG FÜR SILAGE IN EINEM SILO UND VERFAHREN ZUM ABDECKEN EINES MIT SILAGE GEFÜLLTEN SILOS
DISPOSITIF DE RECOUVREMENT D'ENSILAGE DANS UN SILO ET PROCEDE DE RECOUVREMENT D'UN SILO REMPLI D'ENSILAGE

(30) Priority: 14.09.2021 BE 202105706
(43) Date of publication of application: 26.07.2023
(73) Proprietor: Cobefa BV, 7780 Komen (BE)
(72) Inventor: DECOCK, Jeroen, 7780 KOMEN (BE)
(74) Representative: Chielens, Kristof
(86) International application number: PCT/IB2022/058555
(87) International publication number: WO 2023/042052

(56) References cited:
- EP-A1- 2 813 137
- GB-A- 2 455 076
- ANONYMOUS: "Poolabdeckung Poolplane Rollschutz Rechteckig mit Hohlsäumen für Stangen, Fertigung nach Maß | Lkw-Plane & Abdeckplane online kaufen", 25 September 2020 (2020-09-25), XP055921786, Retrieved from the Internet <URL:https://web.archive.org/web/20200925124557/https://www.planenmacher.com/planen-in-600-g-m/poolabdeckung-poolplane-rechteckig-mit-hohlsaeume-fuer-stangen-fertigung-nach-mass/a-336> [retrieved on 20220517]
- ANONYMOUS: "Silage Safe", 8 May 2019 (2019-05-08), XP093001985, Retrieved from the Internet <URL:https://www.facebook.com/SilageSafeSystems/photos/a.1398717596912327/2164809663636446> [retrieved on 20221125]
- ANONYMOUS: "Facebook - Silage Safe Systems", 3 September 2019 (2019-09-03), XP055921615, Retrieved from the Internet <URL:https://www.facebook.com/SilageSafeSystems/photos/2369368293180581/> [retrieved on 20220516]
- ANONYMOUS: "Wie funktioniert es? | CBS Beton", 29 September 2020 (2020-09-29), XP055921585, Retrieved from the Internet <URL:https://web.archive.org/web/20200929134814/https://www.cbs-beton.com/de/silage-safe/funktionsweise> [retrieved on 20220516]

## Description

The present invention relates on the one hand to a covering device for covering a silo for storage of silage, said covering device comprising a first and a second covering element, each with a first and a second longitudinal edge located relative to each other, wherein each covering element comprises at least two tubes extending parallel to each other, wherein the first tube of each covering element extends along one of the longitudinal edges of the covering element and the second tube of each covering element extends at a distance from the first tube. On the other hand, the present invention relates to a method for the ensiling of silage.

The present invention further relates to a silo provided with the covering device according to the invention.

Storing of animal feed, especially compacted animal feed such as silage, in so-called clamp silos is known, so that it is available in winter for feeding ruminants (e.g. cattle or sheep) or as biofuel for anaerobic fermenters. The silage (maize, grass) is collected layer by layer in the (clamp) silo and compacted, for example by driving a tractor over it. For optimum storage, air-tight ensiling of the raw fodder is required (low-oxygen fermentation).

A clamp silo normally consists of two concrete side walls placed opposite each other with a floor slab made of concrete or asphalt between them, where the raw fodder is stored. During ensiling, first a waterproof plastic film (wall film) is placed separately over each wall and partially over the floor, so that the walls are protected against the acidic (silo) juices, and furthermore the film prevents air coming through the walls and into contact with the ensiled material. The silo is now filled with silage and is compacted as much as possible by driving a tractor (or bulldozer) over it. This driving over ensures that there is as little oxygen as possible in the silage. After filling the silo, the wall films are closed over the silage and placed over each other. For optimum storage, an extra plastic film is laid on top. It is important that the whole is and remains sealed and air-tight. For this purpose, either heavy bulk materials (e.g. sandbags or old tyres) are placed on the films, or they are tightened with belts.

For sealing with heavy bulk materials, the sandbags or tyres are placed on the plastic film over the whole silo, so that the silo remains air-tight. This is intensive, timeconsuming work, especially for silos that are to be opened several times a year for filling with extra silage ("lasagne silage"). In many cases the silage is filled to well above the walls, so that a steep slope is formed. It is difficult to place the sandbags or tyres on this slope, so that there is a risk of air getting into the silage and consequently of the silage rotting.

When sealing with belts, the belts lie transversely over the silo and they are secured with hooks to both walls. The walls are then equipped with a fastening system, for example in the form of a recess in the wall, in which a (stainless steel) anchor bar is provided and to which the hook of the belt can be hooked or for example in the form of stainless steel fastening eyes that are provided in the top edge of the vertical walls. The belts are then tensioned by means of a tensioning system (for example such as a ratchet). With these belts it is already much easier to open and close the silo, but storage is still not optimum. In the zones between the belts, there is too little pressure on the silage, so that there will also be air infiltration here, and the silage will rot.

European patent publication EP 2 813 137 A1 describes a covering for silage consisting of two parts, wherein each part comprises a drapable tarpaulin made of a waterproof material and a drainage tube that extends along one edge of the drapable tarpaulin and a principal axis in that direction, wherein the drainage tube is provided for discharge of rainwater that ends up on the drapable tarpaulin. In use, the drainage tube is located in the corner of the silo where the side wall and floor slab meet. The first and the second part each have, besides said drainage tube, an additional bar, called the first and second drawbar, wherein the first drawbar extends parallel to the edge of the first part, and the second drawbar extends parallel to the edge of the second part. The disadvantage of this system is that the drainage tube can easily be pulled loose, especially when the silo is not completely full. As a result, there is too little tension on the tarpaulin, so that the silo is not sealed air-tight, which leads to rotting of the stored material. According to EP 2 813 137 A1, in order to seal the silage, the silage is first covered with the first and second part of the covering, after which the first drawbar provided in the drapable tarpaulin of the first part is connected by a belt to the second drawbar provided in the drapable tarpaulin of the second part, so that the first and the second drawbar are pulled towards each other and the first drapable tarpaulin is under tension of a tensile force towards the second side wall and the second drapable sheet is under tension of a tensile force towards the first side wall. Because during closing with this system, a single belt pulls on the upper side, wherein the sheets are then once again folded double, this has the disadvantage that in the zones where the sheets are folded double, the tension on the silo is not distributed uniformly, but there is only pressure on the silo from the belts. Through the uneven tension on the parts (sheets), air can reach the covered material, which leads to rotting of the silage. The covering as known from EP 2 813 137 A1 is marketed under the name "Silage Safe System", and is disclosed inter alia in the publication of CBS Beton ("Wie funktioniert es") and the publication on Facebook concerning Silage Safe Systems, via the URL: https://www.fàcebook.com/SilageSafeSystems/photos/a.1398717596912327/216480 9663636446 and https://www.facebook.com/SilageSafeSystems/photos/2369368293180581.

The present invention therefore aims to provide a covering device for a clamp silo, which can be tensioned tightly so that the silage in the silo is sealed air-tight and wherein said covering device can be opened easily in order to fetch silage from the silo and then can easily be sealed air-tight again.

The aim of the invention is achieved by providing a covering device for covering a silo for storage of silage according to claim 1. The pulling means are provided for connecting the third tube of one covering element to the second tube of the other covering element, preferably while a tensile force is exerted. By using a covering device of this kind, whose covering elements comprise three tubes, it is possible to tension the covering element tightly, preferably by means of pulling means (preferably tensioning belts) provided for this purpose, over the entire upper surface of the silage, so that the silage present in the silo is sealed air-tight. Said sealing device has the additional advantage that it can be opened and closed easily. The second tube of each covering element preferably extends along the longitudinal edge located opposite the longitudinal edge where the first tube extends.

The tubes used are preferably elongated elements preferably with a circular cross-section, which are preferably made of metal. Instead of tubes, it is also possible to use rods. Such rods are preferably massive and preferably are also made of metal. The rods preferably have a square or circular cross-section. Rods may also be regarded as elongated elements. Preferably the various tubes of each covering element have the same length. The second and the third tube may also be shorter than the first tube.

The covering device according to the invention was developed specifically for covering a silo with two vertical side walls. In the covering device according to the invention, the first tubes of each covering element may be regarded as a fastening tube, because these are suitable for being connected to one of the vertical walls of the silo. Preferably the first tube of the first covering element is connected to one side wall and the first tube of the second covering element is connected to the other side wall. The vertical walls are preferably made of concrete. The side walls are preferably walls extending parallel to each other. In an alternative embodiment the walls may also have a conical arrangement. In a further alternative embodiment the first tube of each covering element may be replaced with another suitable fixing means that is intended to fix (or fasten) the longitudinal edge of the covering element to the silo structure, preferably to the side wall of the silo or at the level of the connection of the side wall with the floor structure of the silo. Thus, use may for example be made of separate hooking elements or snap hooks. Another possibility is to increase the thickness of the longitudinal edge where the first tube is normally located.

For connection of the aforementioned "fastening tubes", in a preferred embodiment the covering device according to the invention comprises a hook-shaped connecting element that is connectable detachably to a side wall of the silo. In that case the side walls of the silo are then equipped with a fastening system, for example in the form of a recess in the wall in which a (stainless steel) anchor bar is provided and to which the hook of the belt can be hooked, or for example in the form of stainless steel fastening eyes.

The pulling means comprise first and second pulling means, wherein the first pulling means are designed for connecting the third tube of the first covering element to the second tube of the second covering element, and the second pulling means are designed for connecting the third tube of the second covering element to the second tube of the first covering element. In the context of the present invention, the second and third tube of each covering element may be regarded as "pulling tubes". The pulling means (or clamping means) are preferably configured as a clamping belt made of plastic (polyester) or leather, which is provided at its ends with a hook-shaped element.

In a more preferred embodiment of the covering device according to the invention, the covering elements are made from a woven plastic cloth. The material from which the cloth is manufactured is preferably polyethylene (PE) or HDPE. The various tubes (or rods) are made of galvanized metal. The tubes (or rods) preferably have a length between 1.5 metres and 4 metres, more particularly a length of 2 metres, and a diameter between 10 mm and 40 mm.

According to a particular embodiment of the covering device according to the invention, each covering element comprises three or more tunnel-shaped channels, wherein each channel is suitable for receiving a rod or tube. In particular, each channel comprises a number of cut-outs, through which a tube (or rod) placed in the channel is accessible.

In an advantageous embodiment of the covering device according to the invention, each covering element comprises at least one recess, which forms a passage for the first pulling means that allows the third tube of the first covering element to connect to the second tube of the second covering element.

The present invention also relates to a silo for storage of silage, comprising two vertical side walls, wherein said silo comprises a covering device according to the invention as defined in this patent text or as defined in the respective product claims.

Preferably the first tube of each covering element is designed to be connected to one of the vertical walls of the silo.

The present invention further relates to a method for the ensiling of silage, comprising the following steps:
- placing a first covering element over a first side wall of a silo, wherein the first covering element comprises two longitudinal edges disposed relative to each other and said covering element comprises at least a first tube, a second tube and a third tube extending parallel to each other, wherein the first tube extends along one of the longitudinal edges, the second tube extends at a distance from the first tube, and the third tube extends between the first and the second tube, wherein the first covering element is connected by means of its first tube to the first side wall;
- placing a second covering element over a second side wall of a silo, wherein the second covering element comprises two longitudinal edges disposed relative to each other and said covering element comprises at least a first tube, a second tube and a third tube extending parallel to each other, wherein the first tube of the second covering element extends along one of the longitudinal edges, the second tube of the second covering element_extends at a distance from the first tube of the second covering element, and the third tube of the second covering element extends between the first and the second tube of the second covering element, wherein the second covering element is connected by means of its first tube to the second side wall;
- filling the silo with material that is to be processed into silage;
- covering the material to be processed to silage with the first and the second covering element;
- by means of a first clamping belt, connecting the second tube of the first covering element to the third tube of the second covering element;
- by means of a second clamping belt, connecting the second tube of the second covering element to the third tube of the first covering element;
- tensioning the first and second covering element by tightening the first and second clamping belt.

In practice, at least two (first) clamping belts are used for connecting the second tube (or rod, or bar) of the first covering element to the third tube (or rod, or bar) of the second covering element, or vice versa, and at least two (second) clamping belts are used for connecting the second tube of the second covering element to the third tube of the first covering element, or vice versa.

In a preferred embodiment of the method according to the invention, the first tube of each covering element is connected detachably by means of a hook-shaped connecting element to a side wall of the silo.

According to a more preferred embodiment of the method according to the invention, a waterproof film is placed over the two side walls and the covering elements before the silo is filled with material that is to be processed into silage and said material is covered with this film before it is covered with the first and the second covering element. The film used is preferably a film made of plastic.

To explain the characteristics of the present invention in more detail and to point out additional advantages and features thereof, there now follows a more detailed description of the covering device and a silo according to the invention. It should be made clear that nothing in the following description is to be interpreted as a limitation of the protection for the present invention claimed in the claims.

In this description, reference numbers are used for referring to the appended drawings, wherein:
- ***Fig. 1*** *is a perspective view of a covering element that forms part of the covering device according to the invention;*
- ***Fig. 2*** *is a representation of a hook-shaped element with which a covering element is connectable detachably to a side wall of a silo;*
- ***Fig. 3*** *is a representation of a pulling means that is used for connecting the first and the second covering element to each other;*

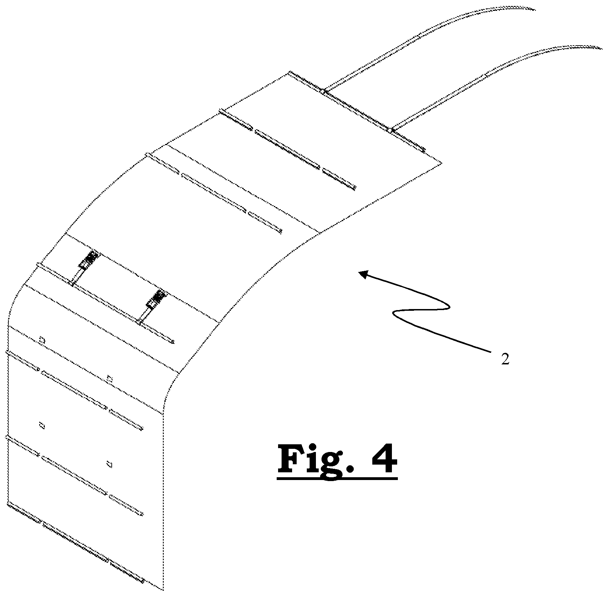

- ***Fig. 4*** *shows a possible configuration of a covering element that forms part of the covering device according to the invention;*
- ***Fig. 5*** *shows a cross-section of a silo that is provided with the covering device according to the invention, in the opened state;*
- ***Fig. 6*** *shows a cross-section of a silo that is provided with the covering device according to the invention, in the closed state.*

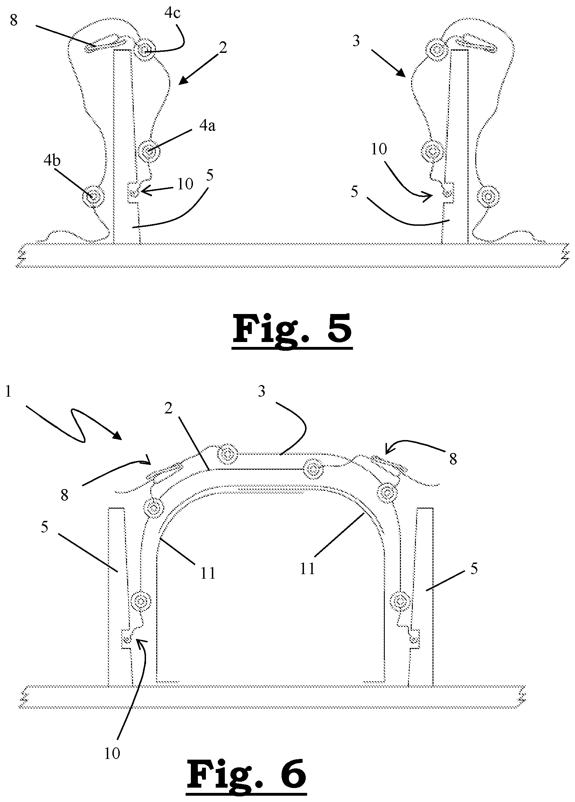

The invention ensures that a silo, in which compacted animal feed such as silage is stored, can be opened and closed easily, in combination with good sealing. A silo of this kind is shown in cross-section in Fig. 6 and comprises a first side wall with a first length, and a second side wall with a second length. The side walls (5) of the silo are indicated with the reference number "5". The first side wall and the second side wall are opposite each other in their longitudinal direction.

The first side wall and the second side wall may be of concrete or of stone. Between the first side wall and the second side wall, a floor is provided, which is made of concrete or asphalt. This floor may be a flat floor, but will in practice have a certain slope, so that juices from the silage can be led away.

The first side wall and the second side wall are typically between 30 and 100 m long and the floor is typically between 5 and 24 metres wide. The first side wall and the second side wall are typically 0.8 to 3 m high. Obviously the dimensions may in practice also vary widely from the stated numbers.

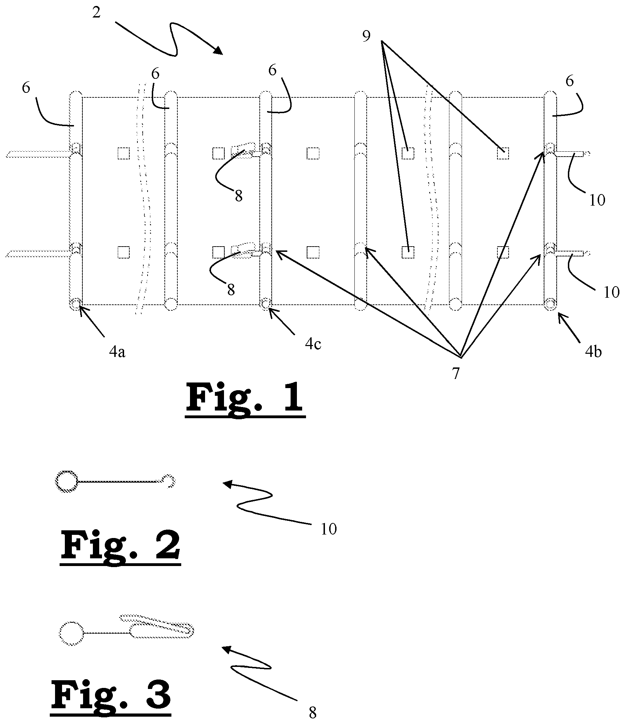

For adequately covering the silo, the present invention provides a covering device (1), which comprises a first covering element (2) and a second covering element (3) with at least two longitudinal edges located relative to each other, wherein each covering element (2; 3) comprises at least three tubes or rods extending parallel to each other, wherein the first tube (4a) and the second tube (4b) of each covering element (2; 3) each extend along one of, or in the vicinity of one of, the longitudinal edges of the covering element (2; 3) and wherein the third tube (4c), as shown in Fig. 1, extends between the first and the second tube, at a distance from the first tube (4a) and the second tube (4b). In practice, the covering elements are of a rectangular shape.

The covering elements (2; 3) are identical cloths, in which three or more tunnel-shaped channels (6) are applied. Each channel (6) is suitable for receiving an elongated element, such as a tubular or rod-shaped structure. The tunnel-shaped channels (6) are oriented in the longitudinal direction of the silo. For each covering element (2; 3) there are three metal tubes in said channels, two tubes (4a and 4b) are preferably at the level of (or near) the ends of the cloth, and the middle tube (4c) may optionally (if more than three channels are provided in the cloth) be of modular configuration in the various remaining channels, depending on the height or width of the silo. Cut-outs (7) are applied in said channels (6). At the level of the cut-out (7) the tubes are accessible, and a pulling means (8), for example as shown in Fig. 3, in the form of a belt may be fastened to the metal tube that extends in the respective channel.

The covering elements (2; 3) are in practice made of a woven material or a nonwoven material.

When during ensiling we wish to make use of the covering device according to the invention, as shown in Fig. 5, the first covering element (2) should be placed over a first side wall of the silo, and the first covering element (2) is connected by means of its first tube (4a) to the first side wall. In a similar manner, the second covering element (3) is placed over the second side wall of the silo (see Fig. 5). For connecting the two covering elements (2; 3) to the side walls of the silo, suitable fastenings are provided in the walls on the inside of the silo, which are distributed in the longitudinal direction of the silo according to the recesses in the slotted openings in the cloth. The end of the cloth is fastened to the side wall by means of a hook system, which is suspended round the metal tube with a belt via the cut-outs in the tunnel-shaped channels. A hook system of this kind, in the form of a hook-shaped connecting element (10), is illustrated in Fig. 2.

To prevent water (for example resulting from precipitation) reaching the covered silage, a waterproof film (11), or a first and a second waterproof film, is/are placed over the two side walls before the silo is filled with material that is to be processed into silage.

In the next step, the silo is filled with a layer of material (plant material) that is converted to silage by fermentation. This material may be grass and/or maize. Then the first and the second waterproof film are fitted over the applied layer of material in such a way that the end that previously extended over the top of the first and second side wall of the silo, overlap each other (optionally an extra (third) waterproof film may be placed on top of the two films). Next, the first covering element (2) is folded over the first waterproof film (11) and then the second covering element (3) is folded over the second waterproof film to overlap the first covering element partially (see Fig. 6).

Once the two covering elements (2; 3) are in place, using a first clamping belt (for example as shown in Fig. 3), the second tube of the first covering element will be connected to the third tube of the second covering element, and using a second clamping belt, the second tube of the second covering element will be connected to the third tube of the first covering element. Then the first and the second covering elements are tensioned by tightening the first and second clamping belt. Clamping may take place by using tensioning means, which are used for fixing loads on a lorry. Because the two covering elements are on top of one another, the belt that goes from the end of the lower cloth to the middle tube of the upper cloth will pass through the upper cloth via a specially provided opening.

The great advantages of the covering device according to the invention are:
- the whole surface of the silage is compacted air-tight, even on the slope that comes above the walls;
- the covering elements cannot be folded double, because there will always be tension on both ends;
- the covering elements cannot come loose, owing to the hook connection to the walls;
- also owing to the hook connection and the double tensioning of the belts, enormous forces can be generated;
- the silo is easy to open and close, without hauling heavy weights.

## Claims

1. Covering device (1) for covering a silo for storage of silage, said covering device (1) comprising a first covering element (2) and a second covering element (3), each with a first and a second longitudinal edge disposed relative to each other, wherein each covering element (2; 3) comprises at least a first tube (4a) and a second tube (4b) extending parallel to each other, wherein the first tube (4a) of each covering element (2; 3) extends along one of the longitudinal edges of the respective covering element (2; 3) and the second tube (4b) of each covering element (2; 3) extends at a distance from the first tube (4a), wherein each covering element (2; 3) comprises a third tube (4c) that extends parallel to and between the first tube (4a) and the second tube (4b) of the respective same covering element, and in that the covering device (1) comprises further pulling means (8) that are intended for connecting the third tube (4c) of one covering element of the first (2) and second (3) covering elements to the second tube (4b) of the other covering element of the first (2) and second (3) covering elements, wherein the pulling means comprise first and second pulling means, wherein the first pulling means are provided for connecting the third tube (4c) of the first covering element (2) to the second tube (4b) of the second covering element (3),
**characterized in that**
the second pulling means are provided for connecting the third tube (4c) of the second covering element (3) to the second tube (4b) of the first covering element (2).

2. Covering device (1) according to claim 1, **characterized in that** the first (2) and second (3) covering elements are formed from a woven plastic cloth.

3. Covering device (1) according to one of the preceding claims, **characterized in that** the first, second and third tubes (4a, 4b, 4c) are formed from galvanized metal.

4. Covering device (1) according to one of the preceding claims, **characterized in that** the first, second and third tubes have a length between 1.5 metres and 4 metres and a diameter between 10 mm and 40 mm.

5. Covering device (1) according to one of the preceding claims, **characterized in that** each covering element (2; 3) comprises three or more tunnel-shaped channels (6) wherein each channel (6) is suitable for receiving a first, second or third tube.

6. Covering device (1) according to Claim 5, **characterized in that** each channel (6) comprises a number of cut-outs (7) through which a tube placed in the channel (6) is accessible.

7. Covering device (1) according to one of the preceding Claims, **characterized in that** each covering element (2; 3) comprises at least one recess (9) that forms a passage for the first pulling means, allowing the third tube (4c) of the first covering element (2) to be connected to the second tube (4b) of the second covering element (3).

8. Silo for storage of silage comprising two vertical side walls (5), **characterized in that** said silo comprises a covering device according to one of Claims 1 to 7.

9. Method for the ensiling of silage comprising the following steps:
- placing a first covering element (2) over a first side wall of a silo, wherein the first covering element (2) comprises two longitudinal edges disposed relative to each other and said covering element (2) comprises at least a first tube (4a), a second tube (4b) and a third tube (4c) extending parallel to each other, wherein the first tube (4a) extends along one of the longitudinal edges, the second tube (4b) extends at a distance from the first tube (4a), and the third tube (4c) extends between the first tube (4a) and the second tube (4b), wherein the first covering element (2) is connected by means of its first tube (4a) to the first side wall;
- placing a second covering element (3) over a second side wall of a silo, wherein the second covering element (3) comprises two longitudinal edges disposed relative to each other and said covering element (3) comprises at least a first tube (4a), a second tube (4b) and a third tube (4c) extending parallel to each other, wherein the first tube (4a) of the second covering element (3) extends along one of the longitudinal edges, the second tube (4b) of the second covering element (3) extends at a distance from the first tube (4a) of the second covering element (3), and the third tube (4c) of the second covering element (3) extends between the first tube (4a) and the second tube (4b) of the second covering element (3), wherein the second covering element (3) is connected by means of its first tube (4a) to the second side wall;
- filling the silo with material that is to be processed into silage;
- covering the material to be processed to silage with the first covering element (2) and the second covering element (3);
- by means of a first clamping belt, connecting the second tube (4b) of the first covering element (2) to the third tube (4c) of the second covering element (3);
**characterized in that**
- by means of a second clamping belt, connecting the second tube (4b) of the second covering element (3) to the third tube (4c) of the first covering element (2);
- tensioning the first covering element (2) and the second covering element (3) by tightening the first and second clamping belt.

10. Method according to Claim 9, **characterized in that** the first tube (4a) of each covering element (2; 3) is connected detachably by means of a hook-shaped connecting element to a side wall of the silo.

11. Method according to Claim 9 or 10, **characterized in that** a waterproof film is placed over the two side walls and the covering elements (2, 3) before the silo is filled with material that is to be processed into silage and **in that** said material is covered with this film before it is covered with the first covering element (2) and the second covering element (3).

## Patentansprüche

1. Abdeckvorrichtung (1) zum Abdecken eines Silos zur Lagerung von Silage, wobei die Abdeckvorrichtung (1) ein erstes Abdeckelement (2) und ein zweites Abdeckelement (3) umfasst, deren jeweiliger erster und zweiter Längsrand bezüglich einander angeordnet sind, wobei jedes Abdeckelement (2; 3) mindestens ein erstes Rohr (4a) und ein zweites Rohr (4b) umfasst, die sich parallel zueinander erstrecken, wobei sich das erste Rohr (4a) jedes Abdeckelements (2; 3) entlang eines der Längsränder des jeweiligen Abdeckelements (2; 3) erstreckt und sich das zweite Rohr (4b) jedes Abdeckelements (2; 3) in einem Abstand von dem ersten Rohr (4a) erstreckt, wobei jedes Abdeckelement (2; 3) ein drittes Rohr (4c) umfasst, das sich parallel zu dem ersten Rohr (4a) und dem zweiten Rohr (4b) des jeweiligen selben Abdeckelements und zwischen ihnen erstreckt, und dass die Abdeckvorrichtung (1) ferner Zugmittel (8) umfasst, die dazu bestimmt sind, das dritte Rohr (4c) eines Abdeckelements des ersten (2) und des zweiten (3) Abdeckelements mit dem zweiten Rohr (4b) des anderen Abdeckelements des ersten (2) und des zweiten (3) Abdeckelements zu verbinden, wobei die Zugmittel erste und zweite Zugmittel umfassen, wobei die ersten Zugmittel dazu vorgesehen sind, das dritte Rohr (4c) des ersten Abdeckelements (2) mit dem zweiten Rohr (4b) des zweiten Abdeckelements (3) zu verbinden, **dadurch gekennzeichnet, dass** die zweiten Zugmittel zum Verbinden des dritten Rohrs (4c) des zweiten Abdeckelements (3) mit dem zweiten Rohr (4b) des ersten Abdeckelements (2) vorgesehen sind.

2. Abdeckvorrichtung (1) nach Anspruch 1, **dadurch gekennzeichnet, dass** das erste (2) und das zweite (3) Abdeckelement aus einem Kunststoffgewebe ausgebildet sind.

3. Abdeckvorrichtung (1) nach einem der vorhergehenden Ansprüche, **dadurch gekennzeichnet, dass** das erste, das zweite und das dritte Rohr (4a, 4b, 4c) aus verzinktem Metall ausgebildet sind.

4. Abdeckvorrichtung (1) nach einem der vorhergehenden Ansprüche, **dadurch gekennzeichnet, dass** das erste, das zweite und das dritte Rohr eine Länge zwischen 1,5 Meter und 4 Meter und einen Durchmesser zwischen 10 mm und 40 mm aufweisen.

5. Abdeckvorrichtung (1) nach einem der vorhergehenden Ansprüche, **dadurch gekennzeichnet, dass** jedes Abdeckelement (2; 3) drei oder mehr tunnelförmige Kanäle (6) umfasst, wobei jeder Kanal (6) für die Aufnahme eines ersten, zweiten oder dritten Rohrs geeignet ist.

6. Abdeckvorrichtung (1) nach Anspruch 5, **dadurch gekennzeichnet, dass** jeder Kanal (6) eine Anzahl von Ausschnitten (7) umfasst, durch die ein in den Kanal (6) platziertes Rohr zugänglich ist.

7. Abdeckvorrichtung (1) nach einem der vorhergehenden Ansprüche, **dadurch gekennzeichnet, dass** jedes Abdeckelement (2; 3) mindestens eine Aussparung (9) umfasst, die einen Durchgang für das erste Zugmittel bildet, wodurch das dritte Rohr (4c) des ersten Abdeckelements (2) mit dem zweiten Rohr (4b) des zweiten Abdeckelements (3) verbunden werden kann.

8. Silo zur Lagerung von Silage, umfassend zwei vertikale Seitenwände (5), **dadurch gekennzeichnet, dass** das Silo eine Abdeckvorrichtung nach einem der Ansprüche 1 bis 7 umfasst.

9. Verfahren zum Silieren von Silage, das die folgenden Schritte umfasst:
- Platzieren eines ersten Abdeckelements (2) über einer ersten Seitenwand eines Silos, wobei das erste Abdeckelement (2) zwei Längsränder umfasst, die relativ zueinander angeordnet sind, und das Abdeckelement (2) mindestens ein erstes Rohr (4a), ein zweites Rohr (4b) und ein drittes Rohr (4c) umfasst, die sich parallel zueinander erstrecken, wobei sich das erste Rohr (4a) entlang eines der Längsränder erstreckt, das zweite Rohr (4b) sich in einem Abstand von dem ersten Rohr (4a) erstreckt und das dritte Rohr (4c) sich zwischen dem ersten Rohr (4a) und dem zweiten Rohr (4b) erstreckt, wobei das erste Abdeckelement (2) mittels seines ersten Rohrs (4a) mit der ersten Seitenwand verbunden ist,
- Platzieren eines zweiten Abdeckelements (3) über einer zweiten Seitenwand eines Silos, wobei das zweite Abdeckelement (3) zwei Längsränder umfasst, die relativ zueinander angeordnet sind, und das Abdeckelement (3) mindestens ein erstes Rohr (4a), ein zweites Rohr (4b) und ein drittes Rohr (4c) umfasst, die sich parallel zueinander erstrecken, wobei sich das erste Rohr (4a) des zweiten Abdeckelements (3) entlang eines der Längsränder erstreckt, das zweite Rohr (4b) des zweiten Abdeckelements (3) sich in einem Abstand von dem ersten Rohr (4a) des zweiten Abdeckelements (3) erstreckt und das dritte Rohr (4c) des zweiten Abdeckelements (3) sich zwischen dem ersten Rohr (4a) und dem zweiten Rohr (4b) des zweiten Abdeckelements (3) erstreckt, wobei das zweite Abdeckelement (3) mittels seines ersten Rohrs (4a) mit der zweiten Seitenwand verbunden ist,
- Füllen des Silos mit Material, das zu Silage verarbeitet werden soll,
- Abdecken des zu Silage zu verarbeitenden Materials mit dem ersten Abdeckelement (2) und dem zweiten Abdeckelement (3),
- Verbinden des zweiten Rohrs (4b) des ersten Abdeckelements (2) mit dem dritten Rohr (4c) des zweiten Abdeckelements (3) mittels eines ersten Spannriemens,
**gekennzeichnet durch**
- Verbinden des zweiten Rohrs (4b) des zweiten Abdeckelements (3) mit dem dritten Rohr (4c) des ersten Abdeckelements (2) mittels eines zweiten Spannriemens,
- Spannen des ersten Abdeckelements (2) und des zweiten Abdeckelements (3) durch Anziehen des ersten und des zweiten Spannriemens.

10. Verfahren nach Anspruch 9, **dadurch gekennzeichnet, dass** das erste Rohr (4a) jedes Abdeckelements (2; 3) mittels eines hakenförmigen Verbindungselements lösbar mit einer Seitenwand des Silos verbunden ist.

11. Verfahren nach Anspruch 9 oder 10, **dadurch gekennzeichnet, dass** vor dem Füllen des Silos mit zu Silage zu verarbeitendem Material eine wasserdichte Folie über die beiden Seitenwände und die Abdeckelemente (2, 3) platziert wird und dass das Material mit dieser Folie abgedeckt wird, bevor es mit dem ersten Abdeckelement (2) und dem zweiten Abdeckelement (3) abgedeckt wird.

## Revendications

1. Dispositif de recouvrement (1) pour recouvrir un silo pour le stockage d'ensilage, ledit dispositif de recouvrement (1) comprenant un premier élément de recouvrement (2) et un second élément de recouvrement (3), chacun avec un premier et un second bord longitudinal disposés l'un par rapport à l'autre, chaque élément de recouvrement (2 ; 3) comprenant au moins un premier tube (4a) et un deuxième tube (4b) s'étendant parallèlement l'un à l'autre, le premier tube (4a) de chaque élément de recouvrement (2 ; 3) s'étendant le long de l'un des bords longitudinaux de l'élément de recouvrement (2 ; 3) respectif et le deuxième tube (4b) de chaque élément de recouvrement (2 ; 3) s'étendant à une certaine distance du premier tube (4a), chaque élément de recouvrement (2 ; 3) comprenant un troisième tube (4c) qui s'étend parallèlement au premier tube (4a) et au deuxième tube (4b) du même élément de recouvrement respectif et entre eux, et en ce que le dispositif de recouvrement (1) comprend en outre un moyen de traction (8) qui est destiné à relier le troisième tube (4c) d'un élément de recouvrement des premier (2) et second (3) éléments de recouvrement au deuxième tube (4b) de l'autre élément de recouvrement des premier (2) et second (3) éléments de recouvrement, le moyen de traction comprenant des premier et second moyens de traction, le premier moyen de traction étant fourni pour relier le troisième tube (4c) du premier élément de recouvrement (2) au second tube (4b) du second élément de recouvrement (3), **caractérisé en ce que** le second moyen de traction est fourni pour relier le troisième tube (4c) du second élément de recouvrement (3) au deuxième tube (4b) du premier élément de recouvrement (2).

2. Dispositif de recouvrement (1) selon la revendication 1, **caractérisé en ce que** les premier (2) et second (3) éléments de recouvrement sont formés d'une toile plastique tissée.

3. Dispositif de recouvrement (1) selon l'une des revendications précédentes, **caractérisé en ce que** les premier, deuxième et troisième tubes (4a, 4b, 4c) sont formés de métal galvanisé.

4. Dispositif de recouvrement (1) selon l'une des revendications précédentes, **caractérisé en ce que** les premier, deuxième et troisième tubes ont une longueur comprise entre 1,5 mètre et 4 mètres et un diamètre compris entre 10 mm et 40 mm.

5. Dispositif de recouvrement (1) selon l'une des revendications précédentes, **caractérisé en ce que** chaque élément de recouvrement (2 ; 3) comprend trois canaux (6) ou plus en forme de tunnel, chaque canal (6) étant apte à recevoir un premier, un deuxième ou un troisième tube.

6. Dispositif de recouvrement (1) selon la revendication 5, **caractérisé en ce que** chaque canal (6) comprend un certain nombre de découpes (7) à travers lesquelles un tube placé dans le canal (6) est accessible.

7. Dispositif de recouvrement (1) selon l'une des revendications précédentes, **caractérisé en ce que** chaque élément de recouvrement (2 ; 3) comprend au moins un évidement (9) qui forme un passage pour le premier moyen de traction, permettant au troisième tube (4c) du premier élément de recouvrement (2) d'être raccordé au deuxième tube (4b) du second élément de recouvrement (3).

8. Silo de stockage d'ensilage comprenant deux parois latérales verticales (5), **caractérisé en ce que** ledit silo comprend un dispositif de recouvrement selon l'une des revendications 1 à 7.

9. Procédé destiné à ensiler de l'ensilage comprenant les étapes consistant à :
- placer un premier élément de recouvrement (2) sur une première paroi latérale d'un silo, le premier élément de recouvrement (2) comprenant deux bords longitudinaux disposés l'un par rapport à l'autre et ledit élément de recouvrement (2) comprenant au moins un premier tube (4a), un deuxième tube (4b) et un troisième tube (4c) s'étendant parallèlement l'un à l'autre, le premier tube (4a) s'étendant le long de l'un des bords longitudinaux, le deuxième tube (4b) s'étendant à une certaine distance du premier tube (4a) et le troisième tube (4c) s'étendant entre le premier tube (4a) et le deuxième tube (4b), le premier élément de recouvrement (2) étant raccordé à la première paroi latérale au moyen de son premier tube (4a) ;
- placer un second élément de recouvrement (3) sur une seconde paroi latérale d'un silo, le second élément de recouvrement (3) comprenant deux bords longitudinaux disposés l'un par rapport à l'autre et ledit élément de recouvrement (3) comprenant au moins un premier tube (4a), un deuxième tube (4b) et un troisième tube (4c) s'étendant parallèlement l'un à l'autre, le premier tube (4a) du second élément de recouvrement (3) s'étendant le long de l'un des bords longitudinaux, le deuxième tube (4b) du second élément de recouvrement (3) s'étendant à une certaine distance du premier tube (4a) du second élément de recouvrement (3), et le troisième tube (4c) du second élément de recouvrement (3) s'étendant entre le premier tube (4a) et le deuxième tube (4b) du second élément de recouvrement (3), le second élément de recouvrement (3) étant raccordé à la seconde paroi latérale au moyen de son premier tube (4a) ;
- remplir le silo avec du matériau destiné à être transformé en ensilage ;
- recouvrir le matériau destiné à être transformé en ensilage avec le premier élément de recouvrement (2) et le second élément de recouvrement (3) ;
- au moyen d'une première courroie de serrage, raccorder le deuxième tube (4b) du premier élément de recouvrement (2) au troisième tube (4c) du second élément de recouvrement (3) ;
**caractérisé par**,
- au moyen d'une seconde courroie de serrage, raccorder le deuxième tube (4b) du second élément de recouvrement (3) au troisième tube (4c) du premier élément de recouvrement (2) ;
- tendre le premier élément de recouvrement (2) et le second élément de recouvrement (3) en serrant la première et la seconde courroie de serrage.

10. Procédé selon la revendication 9, **caractérisé en ce que** le premier tube (4a) de chaque élément de recouvrement (2 ; 3) est raccordé de manière amovible à une paroi latérale du silo au moyen d'un élément de raccordement en forme de crochet.

11. Procédé selon la revendication 9 ou 10, **caractérisé en ce qu'**un film imperméable est placé sur les deux parois latérales et les éléments de recouvrement (2, 3) avant que le silo ne soit rempli de matériau destiné à être transformé en ensilage et **en ce que** ledit matériau est recouvert de ce film avant d'être recouvert par le premier élément de recouvrement (2) et le second élément de recouvrement (3).
